# EUROPEAN PATENT APPLICATION

(11) **EP 3 095 660 A2**
(43) Date of publication of application: **23.11.2016**
(21) Application number: 16169561.4
(22) Date of filing: 13.05.2016
(51) Int. Cl.: B60W 30/095, B60K 31/18

(54) **A METHOD AND SYSTEM FOR INCREASING DRIVER AWARENESS BY MODIFYING THE FREQUENCY OF A VISUAL SYSTEM**

(30) Priority: 19.05.2015 GB 201508600
(71) Applicant: Ford Global Technologies, LLC, Dearborn, MI 48126 (US)
(72) Inventor: MANKIN, James, Billericay, Essex CM11 1LQ (GB); BROWN, Richard, Hertfordshire HP4 3DS (GB)
(74) Representative: Dowling, Andrew

(57) **Abstract**

A method of increasing driver awareness for a first vehicle (103), the method comprising: establishing a connection (109a, 109b) between the first vehicle (103) and at least one of a second vehicle (105) and a central server (107); determining that the first vehicle (103) may encounter a potential hazard from information provided by the connection (109a, 109b) between the first vehicle (103) and at least one of the second vehicle (105) and the central server (107); and at least on of: attenuating at least one of an audio system and a visual system of the first vehicle (103); and adjusting an operational frequency of the visual system of the first vehicle.

## Description

This disclosure relates to a method and a system for increasing driver awareness, and in particular, but not exclusively, relates to a method and a system for attenuating at least one of an audio system and a visual system of a vehicle.

### Introduction

A driver of a vehicle faces a variety of distractions when driving. Many of these distractions are provided in the vehicle itself, such as by radio or other infotainment system. It is desirable for the driver to be able to focus on the surrounding environment without distraction.

Modern vehicles are increasingly connected to their environment, for example by virtue of vehicle-to-vehicle (V2V) and/or vehicle-to-infrastructure (V2i) connections, which allows the vehicle to apprehend when the driver of the vehicle may encounter a potential hazard. For example, a vehicle may be a "connected vehicle" that is equipped with Internet access and/or a wireless local area network (WLAN), which allows the vehicle to share Internet access with other devices both inside as well as outside the vehicle. In a connected system, the vehicle may receive information that another vehicle is approaching a blind spot, or, in particular example, an emergency vehicle is approaching. In these circumstances it is useful to allow the driver maximum opportunity to respond.

### Statements of Invention

According to an aspect of the present invention there is provided a method of increasing driver awareness for a first vehicle. Driver awareness may be increased by reducing or removing one or more distractions that divert the attention of the driver away from the road or highway. The method may comprise establishing a connection between the first vehicle and a second vehicle, for example an emergency vehicle. The method may comprise establishing a connection between the first vehicle and a central server, for example a server provided as part of the highway infrastructure.

The method comprises determining that the first vehicle may encounter a potential hazard, for example determining that the first vehicle is approaching or is being approached by a potential hazard. The potential hazard may be any appropriate circumstance that requires the driver of the first vehicle to pay increased attention to the environment surrounding the vehicle, for example when the first vehicle is in or near to a blind spot of another vehicle, and/or when the course of the first vehicle is likely to cross the course of another vehicle. Information provided by the connection between the first vehicle and the second vehicle may be used to determine that the first vehicle may encounter the potential hazard. Information provided by the connection between the first vehicle and the central server may be used to determine that the first vehicle may encounter the potential hazard.

The method may comprise attenuating, for example reducing an operational level of, an audio system of the first vehicle. The method may comprise attenuating, for example reducing an operational level of, a visual system of the first vehicle.

The method may comprise adjusting the operational frequency of the visual system of the first vehicle. The operational frequency of the visual system may be adjusted to change the wavelength of a light emitted from the visual system. For example, the hue of the light may be changed in response to determining that the first vehicle may encounter a potential hazard. This may be advantageous as the hue of the interior lighting may be changed, for example from a white hue to a red hue, in response to determining that the first vehicle may encounter a potential hazard. Additionally or alternatively, the interior lighting of the vehicle may be changed to reflect that an emergency vehicle is approaching the first vehicle by varying the hue of the interior light between two or more colours, such as blue and red. The operational frequency of the visual system may be adjusted to change the time period between variations in the hue of the interior light. For example, the frequency of the variation may be changed depending on the proximity of the emergency vehicle to the first vehicle.

The method may comprise adjusting the operational frequency of the audio system of the first vehicle. The operational frequency of the audio system may be adjusted to change the pitch of a sound from the audio system. The operational frequency of the audio system may be adjusted to change the time period between discrete sounds, for example beeps or pips produced by the audio system.

The method may comprise determining an operational level of the audio system of the first vehicle. The method may comprise determining an operational level of the visual system of the first vehicle. The method may comprise reducing the operational level of the audio system if the operational level of the audio system is greater than a predetermined level. The method may comprise reducing the operational level of the visual system if the operational level of the visual system is greater than a predetermined level.

The method may comprise determining the position of the first vehicle, for example using a global positioning satellite (GPS) system. The method may comprise determining the position of the second vehicle, for example using a GPS system. The method may comprise comparing the position of the first vehicle to the position of the second vehicle, for example to determine the distance between the first vehicle and the second vehicle. The method may comprise determining the speed and/or course of the first vehicle. The method may comprise determining the speed and/or course of the second vehicle.

The method may comprise predicting the future position of the first vehicle. The method may comprise predicting the future position of the second vehicle. The future position of the first and/or second vehicles may be predicted using data regarding the current position, speeds and/or trajectories of the first and/or second vehicles. The future position of the first and/or second vehicles may be predicted using data supplied by a satellite navigation system of first and/or second vehicle. The method may comprise comparing the future position of the first vehicle to the future position of the second vehicle, for example to determine if the first and second vehicles are likely to come into proximity with each other.

The method may comprise determining the route of the first vehicle. For example, the route may be an intended route of the first vehicle, which may be determined using data supplied by a satellite navigation system of the first vehicle. The method may comprise determining the route of the second vehicle. For example, the route may be an intended route of the second vehicle, which may be determined using data supplied by a satellite navigation system of the second vehicle.

The method may comprise comparing at least one of the position of the first vehicle, the route of the first vehicle and the predicted future position of the first vehicle to at least one of the position of the second vehicle, the route of the second vehicle and the predicted future position of the second vehicle.

The method may comprise providing an alternate route, for example indicating an alternate route to the intended route, to the driver of the first vehicle. The alternate route may be provided when at least one of the position of the first vehicle, the route of the first vehicle and the predicted future position of the first vehicle corresponds to at least one of the position of the second vehicle, the route of the second vehicle and the predicted future position of the second vehicle. For example, the method may comprise indicating to the driver of the first vehicle that their current intended route brings them into proximity with the potential hazard, and/or indicating to the driver of the first vehicle that the intended course of the second vehicle brings the second vehicle into proximity with their current position. The method may comprise re-routing the driver of the first vehicle away from the potential hazard, for example in a direction away from at least one of the position of the second vehicle, the route of the second vehicle and the predicted future position of the second vehicle.

The method may comprise providing a warning to the driver of the first vehicle that the first vehicle is approaching the potential hazard. The method may comprise providing a warning to the driver of the first vehicle that the second vehicle is approaching the first vehicle. The warning may be provided using one or more visual, aural and/or haptic systems of the first vehicle.

The method may comprise providing an instruction to the driver of the first vehicle to perform a manoeuvre so that the first vehicle avoids the potential hazard. The instruction may be provided using at least one of the audio system and the visual system of the first vehicle. For example, a satellite navigation system of the first vehicle may provide an instruction to manoeuvre the first vehicle out of the path of the second vehicle.

The connection may be established between the first and second vehicles by virtue of a vehicle-to-vehicle communication system. The connection may be established between the first vehicle and the central server by virtue of a vehicle-to-infrastructure communication system.

The method may comprise establishing a connection between the second vehicle and the central server. The method may comprise broadcasting potential hazards of the second vehicle.

The method may comprise determining that the first vehicle may encounter a blind spot of the second vehicle. For example, where the first vehicle is approaching the second vehicle from behind, the method may comprise at least one of: attenuating at least one of the audio system and the visual system of the first vehicle; and adjusting the operational frequency of the visual system of the first vehicle. In this manner, the present disclosure increases the awareness of the first driver by providing an indication to the driver of the first vehicle that they may not be visible to the driver of the second vehicle. The method may comprise determining that the second vehicle may encounter a blind spot of the first vehicle. For example, where the second vehicle is approaching the first vehicle from behind, the method may comprise at least one of: attenuating at least one of the audio system and the visual system of the first vehicle; and adjusting the operational frequency of the visual system of the first vehicle. In this manner, the present disclosure increases the awareness of the first driver by providing an indication to the driver of the first vehicle that the second vehicle may not be visible to the driver of the first vehicle. The method may comprise determining that the first vehicle may encounter an emergency vehicle.

According to another aspect of the present invention there is provided a hazard avoidance method for a driver of a first vehicle, the method comprising: determining first data regarding the position of the first vehicle; determining second data regarding the position of a potential hazard; comparing the first data to the second data; and modifying an intended route of the first vehicle depending on the comparison of the first data to the second data.

The first data may comprise data regarding at least one of the current position of the first vehicle, the intended route of the first vehicle and the predicted future position of the first vehicle. The second data may comprise data regarding at least one of the current position of a second vehicle, the intended route of the second vehicle and the predicted future position of the second vehicle. The method may comprise establishing a connection between the first vehicle and the second vehicle. The method may comprise establishing a connection between the first vehicle and a central server, for example a server provided as part of the highway infrastructure. The method may comprise establishing a connection between the second vehicle and a central server, for example a server provided as part of the highway infrastructure.

The may method comprise determining that the first vehicle may encounter the potential hazard, for example determining that the first vehicle is approaching or is being approached by a potential hazard. The potential hazard may be any appropriate circumstance that requires the driver of the first vehicle to pay increased attention to the environment surrounding the vehicle, for example when the first vehicle is in or near to a blind spot of another vehicle, and/or when the course of the first vehicle is likely to cross the course of another vehicle. Information provided by the connection between the first vehicle and the second vehicle may be used to determine that the first vehicle may encounter the potential hazard. Information provided by the connection between the first vehicle and the central server may be used to determine that the first vehicle may encounter the potential hazard.

According to another aspect of the present invention there is provided a system for increasing driver awareness for a first vehicle. The system comprises a controller, for example an electronic control unit of the first vehicle. The controller may be configured to establish a connection between the first vehicle and a second vehicle. The controller may be configured to establish a connection between the first vehicle a central server. The controller is configured to determine that the first vehicle may encounter a potential hazard. Information provided by the connection between the first vehicle and the second vehicle may be used to determine that the first vehicle may encounter the potential hazard. Information provided by the connection between the first vehicle and the central server may be used to determine that the first vehicle may encounter the potential hazard. The controller may be configured to attenuate an audio system of the first vehicle. The controller may be configured to attenuate a visual system of the first vehicle. The controller may be configured to adjust the operational frequency of an audio system of the first vehicle. The controller may be configured to adjust the operational frequency of a visual system of the first vehicle.

According to another aspect of the present invention there is provided a hazard avoidance system for a driver of a first vehicle. The system comprises a controller, for example an electronic control unit of the first vehicle. The controller may be configured to establish a connection between the first vehicle and a second vehicle. The controller may be configured to establish a connection between the first vehicle a central server. The controller may be configured to establish a connection between the second vehicle a central server. The controller is configured to determine first data regarding the position of a first vehicle. The controller is configured to determine second data regarding the position of a potential hazard. The controller is configured to compare the first data to the second data. The controller is configured to indicate a route of the first vehicle depending on the comparison of the first data to the second data, for example a route that is different from the intend route of the first vehicle.

The controller may be configured to carry out any of the above-mentioned methods.

A vehicle may comprise one or more systems according to the present disclosure.

The invention also provides software, such as a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

To avoid unnecessary duplication of effort and repetition of text in the specification, certain features are described in relation to only one or several aspects or arrangements of the invention. However, it is to be understood that, where it is technically possible, features described in relation to any aspect or arrangement of the invention may also be used with any other aspect or arrangement of the invention.

### Brief Description of the Drawings

For a better understanding of the present disclosure, and to show more clearly how it may be carried into effect, reference will now be made, by way of example, to the accompanying drawings, in which:
Figure 1 illustrates a method according to the present disclosure; and
Figure 2 shows a first vehicle, a second vehicle and a central server.

### Detailed Description

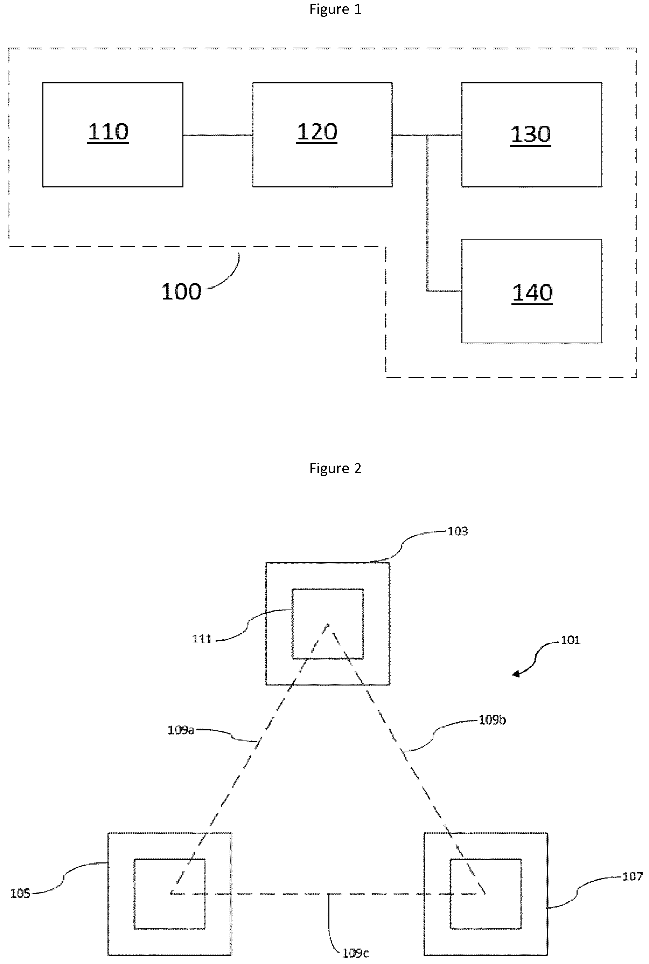

Figures 1 and 2 depict a method 100 and a system 101 for increasing a driver's awareness of the environment surrounding a vehicle. The driver may be a driver of a first vehicle 103, for example a car, van, truck, motorcycle, bicycle, marine vessel or aircraft. The first vehicle 103 may comprise one or more audio systems and/or visual systems that may distract the driver's attention when operating the first vehicle 103. For example, the audio system, such as a car stereo, may be operating at volume level that is sufficient to prevent the driver of the first vehicle 103 from hearing a siren of an approaching emergency vehicle. Additionally or alternatively, the visual system, such as a display screen of an in-car entertainment system or a dashboard display, may distract the driver's attention whilst operating the first vehicle 103.

The method 100 comprises a step 110 of establishing a connection between the first vehicle 103 and at least one of a second vehicle 105 and a central server 107. The second vehicle 105 may be an emergency vehicle, such as a police vehicle or an ambulance. The second vehicle 105 may, however, be any other appropriate type of vehicle. The central server 107 may be provided as part of the highway infrastructure, for example as part of a traffic signal, a toll booth and/or a road-side barrier.

The connection between the first and second vehicles 103, 105 may be established by virtue of a vehicle-to-vehicle communication system, which allows the wireless transfer of data between the first and second vehicles 103, 105. The connection between the first vehicle 103 and the central server 107 may be established by virtue of a vehicle-to-infrastructure communication system, which allows the wireless transfer of data between the first vehicle 103 and the central server 107. The connection may be established using any appropriate type of wireless data transfer system, for example by virtue of a wireless internet connection. In one arrangement, the connection may be established as a one-way connection in which the first vehicle 103 is only able to receive information. However, the connection may be established as a two-way connection in which the first vehicle 103 is able to both send and receive information.

The method 100 comprises a step 120 of determining that the first vehicle 103 is approaching a potential hazard, for example a traffic signal, a stop sign, an obstacle and/or turn in the road, the second vehicle 105, and/or any other road user. The information regarding the potential hazard may be provided by the connection between the first vehicle 103 and at least one of the second vehicle 105 and the central server 107. For example, the second vehicle 105 and/or the central server 107 may provide the first vehicle 103 with information regarding a potential route of an emergency vehicle, a road traffic incident and/or a malfunctioning traffic signal.

The method 100 comprises a step 130 of attenuating at least one of the audio system and the visual system of the first vehicle 103. For example, the method may comprise reducing the volume of the audio system of the first vehicle 103 such that a siren of an approaching emergency vehicle is audible to the driver of the first vehicle 103. In one arrangement, the central server 107 may provide information to the first vehicle 130 regarding the operational state of a traffic signal which the first vehicle 103 is approaching. The system 101 may be configured to reduce the operational level of at least one of the audio system and the visual system of the first vehicle 103 such that the driver's attention is drawn towards the environment surrounding the vehicle.

In the context of the present disclosure, the term "attenuating" may refer to reducing the operational level/operational parameter of a particular vehicular system. For example, the volume level of the audio system may be attenuated to a lower volume level, or the brightness level of the visual system may be attenuated to a lower brightness level. It is understood that the term "attenuating" may include reducing the operational level/operational parameter of a particular vehicular system to zero, for example muting the audio system or turning off the display of the visual system. The method 100 according to the present disclosure may comprise deactivating the audio system and/or the visual system of the first vehicle 103.

The method 100 comprises a step 140 of adjusting the operational frequency of the visual system of the first vehicle 103. For example, the method 100 may comprise varying the hue, i.e. the wavelength, of an interior light of the first vehicle 103. As such, it may be advantageous to change an interior mood light of the first vehicle 103 to a particular hue, for example red, to indicate that the first vehicle 103 is approaching a potential hazard. The wavelength of the light and/or the intensity of the light may be changed by an amount corresponding to the proximity to and/or the level of potential danger. For example, the wavelength of the light may be changed to approximately 550 to 650 nm (yellow/amber light) to indicate a less severe hazard, and the wavelength of the light may be changed to approximately 650 to 700 nm (amber/red light) to indicate a more severe hazard. It is understood, however, that the present disclosure is not limited to changing the wavelength of the light to a value within the above-mentioned wavelength ranges. Indeed, the wavelength of the light may be changed to any appropriate wavelength.

In one arrangement, the colour of the interior light may vary cyclically between two colours, such as blue and red, to indicate that an emergency vehicle is approaching the first vehicle 103. Additionally or alternatively, the operational frequency, i.e. the rate of variation of the hue, of the interior light may be changed in repose to the proximity between the first vehicle 103 and the emergency vehicle. In this manner, when it is determined that an emergency vehicle is approaching the first vehicle 103, the method 100 comprises changing the operational frequency to adjust the wavelength of the light emitted from the visual system and the rate of change of the wavelength of the light.

Figure 2 shows an arrangement of the system 101 for increasing driver awareness according to the present disclosure. In figure 2, a connection 109a is established between a controller 111 of the first vehicle 103 and a controller the second vehicle 105, such that the first vehicle 103 may receive information from the second vehicle 105. Similarly, a connection 109b is established between the controller 111 of the first vehicle 103 and the central server 107, such that the first vehicle 103 may receive information from the central server 107. In this manner, information regarding the relative positions of the first vehicle 103, the second vehicle 105 and the central server 107 may be analysed by the controller 111. The position of the first and second vehicles 103, 105 may be the current position or the predicted future positions of the first and second vehicles 103, 105, for example with respect to each other and/or the central server 107.

The controller 111 is configured to determine if the first vehicle 103 may encounter the potential hazard, for example based on information derived from the data transmitted to the first vehicle 103 from the second vehicle 105 and/or from the central server 107. For example, the controller 111 may be configured to determine if the first vehicle 103 is positioned in a blind spot of the second vehicle 105. Conversely, the controller 111 may be configured to determine if the second vehicle 103 is positioned in a blind spot of the first vehicle 103. The potential hazard may, however, be any appropriate potential hazard that the first vehicle 103 may encounter.

Figure 2 shows another connection 109c that is established between the second vehicle 105 and the central server 107. In this manner, the central server 107 may be used as a hub to relay information from the second vehicle 105 to the first vehicle 103 if a connection cannot be established directly between the first vehicle 103 and the second vehicle 105.

Using V2V, V2i, and/or connected vehicle connection data, the first vehicle 103 becomes aware of a "high-notice" circumstance, such as an approaching ambulance, and reduces or removes driver distractions, for example by turning down stereo and/or cancelling other notifications, to allow the driver to see and hear the ambulance. In a further arrangement, the first vehicle 103 may actually warn the driver of an impending approach or hazard, for example the controller 111 of the first vehicle 103 may be configured to provide a signal to the audio system and/or the visual system of the first vehicle 103. The controller 111 may be configured to control a satellite navigation system of the first vehicle 103, in order to indicate a safe location for the driver of the first vehicle 103 to pull over and allow the second vehicle 105 ambulance to pass.

The present application claims priority from GB1508600.2. The original claims of GB1508600.2 are included as numbered statements below.
Statement 1. A method of increasing driver awareness for a first vehicle, the method comprising:
   establishing a connection between the first vehicle and at least one of a second vehicle and a central server;
   determining that the first vehicle may encounter a potential hazard from information provided by the connection between the first vehicle and at least one of the second vehicle and the central server; and
   attenuating at least one of an audio system and a visual system of the first vehicle.
Statement 2. A method according to statement 1, the method further comprising:
   determining an operational level of at least one of the audio system and the visual system of the first vehicle and reducing the operational level of the audio system or the visual system respectively if the operational level is greater than a predetermined level.
Statement 3. A method according to statement 1 or statement 2, the method further comprising determining the position of the first vehicle.
Statement 4. A method according to any of the preceding statements, the method further comprising determining the position of the second vehicle.
Statement 5. A method according to statement 3 and 4, the method further comprising comparing the position of the first vehicle to the position of the second vehicle.
Statement 6. A method according to any of the preceding statements, the method further comprising predicting the future position of the first vehicle.
Statement 7. A method according to any of the preceding statements, the method further comprising predicting the future position of the second vehicle.
Statement 8. A method according to statement 6 and 7, the method further comprising comparing the future position of the first vehicle to the future position of the second vehicle.
Statement 9. A method according to any of the preceding statements, the method further comprising providing a warning to a driver of the first vehicle that the first vehicle is approaching the potential hazard.
Statement 10. A method according to any of the preceding statements, the method further comprising providing a warning to a driver of the first vehicle that the second vehicle is approaching the first vehicle.
Statement 11. A method according to any of the preceding statements, the method further comprising instructing a driver of the first vehicle to perform a manoeuvre so the that the first vehicle avoids the potential hazard.
Statement 12. A method according to statement 11, wherein the instruction is provided using at least one of the audio system and the visual system of the first vehicle.
Statement 13. A method according to any of the preceding statements, wherein the connection is established between the first and second vehicles by virtue of a vehicle-to-vehicle communication system.
Statement 14. A method according to any of the preceding statements, wherein the connection is established between the first vehicle and the central server by virtue of a vehicle-to-infrastructure communication system.
Statement 15. A method according to any of the preceding statements, the method further comprising establishing a connection between the second vehicle and the central server.
Statement 16. A method according to statement 15, the method further comprising broadcasting potential hazards of the second vehicle.
Statement 17. A method according to any of the preceding statements, the method further comprising determining that the first vehicle may encounter a blind spot of the second vehicle.
Statement 18. A method according to any of the preceding statements, the method further comprising determining that the first vehicle may encounter an emergency vehicle.
Statement 19. A method according to any of the preceding statements, wherein adjusting the operational frequency of the visual system results in a change of the wavelength of a light emitted from the visual system.
Statement 20. A system for increasing driver awareness for a first vehicle, the system comprising one or more controllers configured to:
   establish a connection between the first vehicle and at least one of a second vehicle and a central server;
   determine that the first vehicle may encounter a potential hazard from information provided by the connection between the first vehicle and at least one of the second vehicle and the central server; and at least one of:
      attenuate at least one of an audio system and a visual system of the first vehicle; and
      adjust an operational frequency of the visual system of the first vehicle.
Statement 21. A system according to statement 20, wherein the controller is configured to carry out the method of any of statements 2 to 19.
Statement 22. A vehicle comprising one or more systems of statement 20 or 21.
Statement 23. Software which when executed by a computing apparatus causes the computing apparatus to perform the method of any of statements 1 to 19.

It will be appreciated by those skilled in the art that although the invention has been described by way of example with reference to one or more arrangements, it is not limited to the disclosed arrangements and that alternative arrangements could be constructed without departing from the scope of the invention as defined by the appended claims.

## Claims

1. A method of increasing driver awareness for a first vehicle, the method comprising:
establishing a connection between the first vehicle and at least one of a second vehicle and a central server;
determining that the first vehicle may encounter a potential hazard from information provided by the connection between the first vehicle and at least one of the second vehicle and the central server; and at least one of:
attenuating at least one of an audio system and a visual system of the first vehicle; and
adjusting an operational frequency of the visual system of the first vehicle.

2. A method according to claim 1, the method further comprising:
determining an operational level of at least one of the audio system and the visual system of the first vehicle and reducing the operational level of the audio system or the visual system respectively if the operational level is greater than a predetermined level.

3. A method according to claim 1 or 2, the method further comprising at least one of determining the position of the first vehicle, determining the route of the first vehicle and predicting the future position of the first vehicle.

4. A method according to any of claims 1 to 3, the method further comprising at least one of determining the position of the second vehicle, determining the route of the second vehicle and predicting the future position of the second vehicle.

5. A method according to claims 3 and 4, the method further comprising comparing at least one of the determined position of the first vehicle, the determined route of the first vehicle and the determined future position of the first vehicle to at least one of the determined route of the second vehicle and the determined future position of the second vehicle.

6. A method according to claim 5, the method further comprising providing an alternate route to the driver of the first vehicle when at least one of the determined position of the first vehicle, the determined route of the first vehicle and the determined future position of the first vehicle corresponds to at least one of the determined position of the second vehicle, the determined route of the second vehicle and the determined future position of the second vehicle.

7. A method according to any of the preceding claims, the method further comprising providing a warning to a driver of the first vehicle that the second vehicle is approaching the first vehicle.

8. A method according to any of the preceding claims, wherein the connection is established between the first and second vehicles by virtue of a vehicle-to-vehicle communication system.

9. A method according to any of the preceding claims, wherein the connection is established between the first vehicle and the central server by virtue of a vehicle-to-infrastructure communication system.

10. A method according to any of the preceding claims, the method further comprising establishing a connection between the second vehicle and the central server.

11. A method according to any of the preceding claims, the method further comprising determining that the first vehicle may encounter a blind spot of the second vehicle.

12. A method according to any of the preceding claims, the method further comprising determining that the second vehicle may encounter a blind spot of the first vehicle.

13. A system for increasing driver awareness for a first vehicle, the system comprising one or more controllers configured to:
establish a connection between the first vehicle and at least one of a second vehicle and a central server;
determine that the first vehicle may encounter a potential hazard from information provided by the connection between the first vehicle and at least one of the second vehicle and the central server; and at least one of:
attenuate at least one of an audio system and a visual system of the first vehicle; and
adjust an operational frequency of the visual system of the first vehicle.

14. A vehicle comprising the system of claim 13.

15. Software which when executed by a computing apparatus causes the computing apparatus to perform the method of any of claims 1 to 12.
